(19) Europäisches Patentamt
European Patent Office
Office européen des brevets

(11) **EP 3 176 604 B1**

(12) **EUROPEAN PATENT SPECIFICATION**

(45) Date of publication and mention
of the grant of the patent:
**21.10.2020 Bulletin 2020/43**

(51) Int Cl.:
***G01S 13/931*** *(2020.01)*      ***G01S 13/34*** *(2006.01)*
***G01S 13/44*** *(2006.01)*

(21) Application number: **15197284.1**

(22) Date of filing: **01.12.2015**

(54) **A MONOPULSE VEHICLE RADAR SYSTEM**

MONOIMPULS-KRAFTFAHRZEUG-RADARSYSTEM

SYSTÈME DE RADAR DE VÉHICULE MONOPULSÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.06.2017 Bulletin 2017/23**

(73) Proprietor: **Veoneer Sweden AB
447 83 Vårgårda (SE)**

(72) Inventor: **Klotzbuecher, Dirk
97320 Mainstockheim (DE)**

(74) Representative: **Sandstedt, Jonas Sven James
WESTPATENT AB
Almekärrsvägen 11
443 39 Lerum (SE)**

(56) References cited:
**EP-A1- 2 876 460     US-A1- 2009 079 617**

**Description**

The present disclosure relates to a vehicle radar system comprising at least one transceiver arrangement arranged to generate, transmit at least one FMCW (Frequency Modulated Continuous Wave) chirp signal, and to receive reflected signals.

Many vehicle radar systems comprise means for generating so-called chirp signals that are transmitted, reflected and received by means of appropriate antennas comprised in the radar system. A chirp signal is an FMCW (Frequency Modulated Continuous Wave) signal with a certain amplitude where the frequency is continuously ramped between two values, the chirp signal thus being in the form of a continuous sinusoid where the frequency varies from a first low frequency to a second high frequency over the course of the ramp. The change in frequency from start to finish, the bandwidth, may for example be of the order of 0.5% of the starting frequency.

The received signals, thus constituted by reflected radar echoes, are mixed with the transmitted chirp signal in order to convert the received signals to baseband signals. These baseband signals, or IF (Intermediate Frequency) signals, are amplified and transferred in a plurality of channels to an Analog Digital Converter (ADC) arrangement which is arranged to convert the received analog signals to digital signals. The digital signals are used for retrieving an azimuth angle of possible targets by simultaneously sampling and analyzing phase and amplitude of the received signals. The analysis is generally performed in one or more Digital Signal Processors (DSP:s) by means of Fast Fourier Transform (FFT) processing.

A vehicle radar system may be used for detecting other vehicles, fixed objects and pedestrians, where pedestrian protection will become of an increased importance.

Future radar sensor generations require a high degree of flexibility with respect to positioning in a vehicle. For example it is expected that sensors of one type can be installed in all corners positions of the bumpers to ensure a panorama view without blind spots. Often, the direction with the longest detection range (and thus the highest sensitivity) is located at 45° and more. Therefore, the required detection area, i.e. FOV (field of view), is commonly above 140°.

It is also quite possible that one wants to install the same kind of sensor centered in the vehicle for another application. For this, the reference boresight would probably be at 0°. In addition to the increased flexibility integrating the radar into the vehicle, the requirements of various radar parameters are advanced for future sensors also.

One possible solution would be the use of a scanning radar with many transceiver channels. The number of required Tx-Rx combinations is calculated firstly from the desired angular resolution and, secondly, from the required unambiguous range of the angle.

The document EP 2876460 relates to achieving improved angular accuracy and resolution, and discloses phase shifts between two transmitter antennas.

The document US 2009/079617 relates to direction-of-arrival estimation using a sensor array that enlarges an effective aperture using a plurality of transmitting sensors. A direction of targets is determined by applying a direction-of-arrival estimation method such as a beam former method.

In US 6911934, bearing information for an object is determined using amplitude sensing monopulse theory, which provides a relatively large unambiguous range of the angle.

However, there still exists a desire to obtain a high degree of angular resolution and a minimal angular error.

The object of the present disclosure is thus to provide a vehicle radar system with a high degree of angular resolution and unambiguous range of the angle.

This object is obtained by means of a vehicle radar system as defined in claim 1.

This object is also obtained by means of a method for a vehicle radar system according to claim 7.

According to an example, for the delta signals, the first radar signals are arranged to be transmitted from at least a first transmitting antenna arrangement with a phase difference of 180° to the second radar signals arranged to be transmitted from at least a second transmitting antenna arrangement.

According to another example, each plurality of sum signals and delta signals are transmitted in an interleaved manner, such that after a sum cycle of a sum signal there is a delta cycle of a delta signal and so on, where one radar cycle comprises a sum cycle followed by a delta cycle.

According to another example, each radar signal comprises FMCW (Frequency Modulated Continuous Wave) chirp signals.

According to another example, the vehicle radar system is arranged to:

- Receive reflected signals and store these in the form of complex data in a first matrix.
- Perform a DFT (Digital Fourier Transform) in a horizontal dimension such that a second matrix is obtained, the second matrix constituting the spectral domain of the first matrix.
- Perform a peak detection on the magnitude data of the second matrix.

Other examples are disclosed in the dependent claims.

A number of advantages are obtained by means of the present disclosure. Mainly, a radar system and a method for a radar system are provided, where a high degree of angular resolution and unambiguous range of the angle are obtained.

BRIEF DESCRIPTION OF THE DRAWINGS

The present disclosure will now be described more in detail with reference to the appended drawings, where:

Figure 1      shows a schematic top view of a vehicle;
Figure 2      shows a simplified schematic of a vehicle radar system;
Figure 3a     shows a first antenna radiation pattern;
Figure 3b     shows a second antenna radiation pattern;
Figure 4a     shows a first phase switch setting;
Figure 4b     shows a second phase switch setting;
Figure 5      shows additive sensing ratio as a function of azimuth angle;
Figure 6      shows a receiver antenna array;
Figure 7      shows an antenna configuration with one transmit channel and two receive channels;
Figure 8      shows a first chirp signal;
Figure 9      shows a second chirp signal;
Figure 10     shows a first matrix and a second matrix; and
Figure 11     shows a flowchart for methods according to the present disclosure.

DETAILED DESCRIPTION

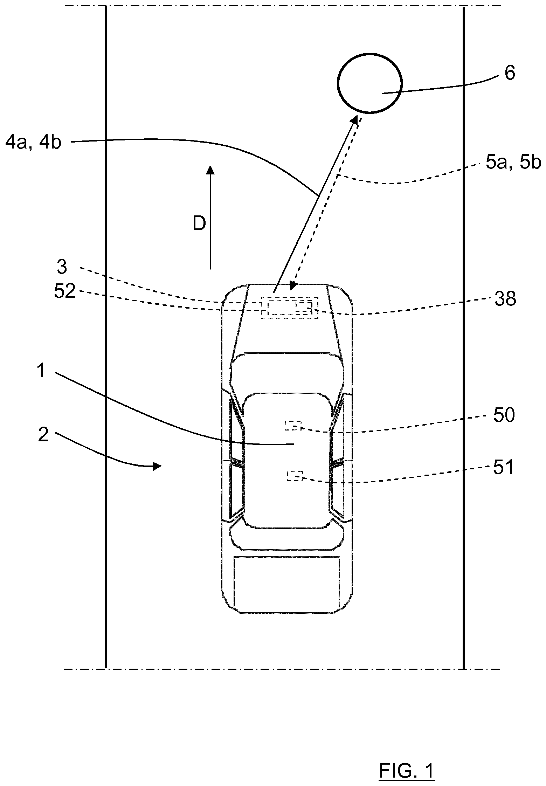

Figure 1 schematically shows a top view of a vehicle 1 arranged to run on a road 2 in a direction D, where the vehicle 1 comprises a vehicle radar system 3 which is arranged to distinguish and/or resolve single targets from the surroundings by transmitting signals 4a, 4b and receiving reflected signals 5a, 5b and using a Doppler effect in a previously well-known manner. The vehicle radar system 3 is arranged to provide azimuth angles of possible target objects 6 by simultaneously sampling and analyzing phase and amplitude of the received signals 5a, 5b.

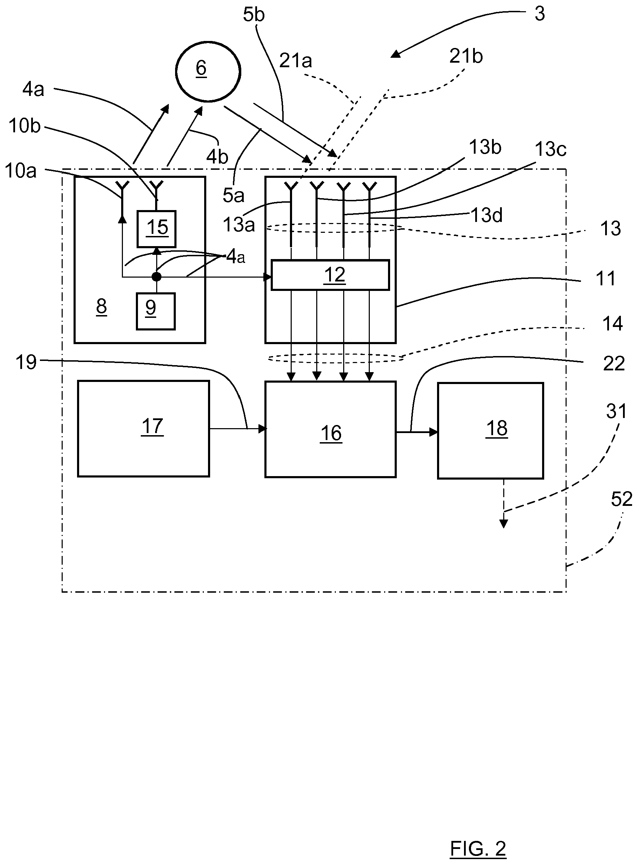

With reference to both Figure 1 and Figure 2, Figure 2 showing a simplified schematic of a vehicle radar system 3 according to a first example, the vehicle radar system 3 comprises transceiver arrangement 52 that in turn comprises a transmitter arrangement 8 which in turn comprises a signal generator 9 that is arranged to generate FMCW (Frequency Modulated Continuous Wave) chirp signals of a previously known kind, comprising frequency ramps, a chirp signal being in the form of a continuous sinusoid where the frequency varies from a first low frequency to a second high frequency over the course of each ramp. The change in frequency from start to finish may for example be of the order of 0.5% of the starting frequency.

The transmitter arrangement 8 further comprises a first transmitter antenna arrangement 10a and a second transmitter antenna arrangement 10b, each transmitter antenna arrangement 10a, 10b either being constituted by one antenna element or by an array of antenna elements, and being arranged to transmit a corresponding first chirp signal 4a and second chirp signal 4b.

The transceiver arrangement 52 further comprises a receiver arrangement 11, which receiver arrangement 11 in turn comprises a receiver mixer 12 and a receiver antenna array 13, where the receiver antenna array 13 comprises four receiver antenna arrangements 13a, 13b, 13c, 13d. In the same way as for the transmitter antenna arrangements, each receiver antenna arrangement 13a, 13b, 13c, 13d may be constituted by one antenna element or by an array of antenna elements.

The transmitted signals 4a, 4b are reflected at a target object 6, and the reflected signals 5a, 5b are received by the receiver arrangement 11 via the receiver antenna arrangements 13a, 13b, 13c, 13d. The reflected signals 5a, 5b each have corresponding wave fronts 21a, 21b, one wave front for each reflected signals 5a, 5b being schematically indicated in Figure 2. By detecting the phases of the received reflected signals 5a, 5b, the inclination of the wave fronts 21a, 21b may be calculated, providing an azimuth bearing angle to the target object 6, in other words a direction of arrival DOA.

The received signals 5a, 5b, thus constituted by reflected radar echoes, are mixed with the second chirp signal 4b in the receiver mixer 12, such that four corresponding IF (Intermediate Frequency) signals 14 are acquired. The difference frequency of the resulting IF signals relates to the target distance.

The transceiver arrangement 52 further comprises an Analog to Digital Converter (ADC) arrangement 16 and a sampling and timing arrangement 17. The four corresponding IF signals 14 are transmitted from the receiver to the ADC arrangement 16 where the IF signals 14 are sampled at a certain predetermined sampling frequency fs and converted to digital signals 22, the sampling frequency fs being provided in the form of a sampling and timing signal 19 produced by the sampling and timing arrangement 17.

The transceiver arrangement 52 further comprises a DSP (Digital Signal Processor) arrangement 18 that is adapted for radar signal processing by means of a first FFT (Fast Fourier Transform) to convert the digital signals 22 to a range domain, and a second FFT to combine the results from successive chirp signal ramps into the Doppler domain. The two-dimensional spectrum of the Range-Doppler matrices that results are forwarded for further processing as indicated with a dashed arrow 31. The vehicle radar system 3 suitably comprises a main control unit 38 that is arranged to control the working of certain components in the vehicle radar system 3.

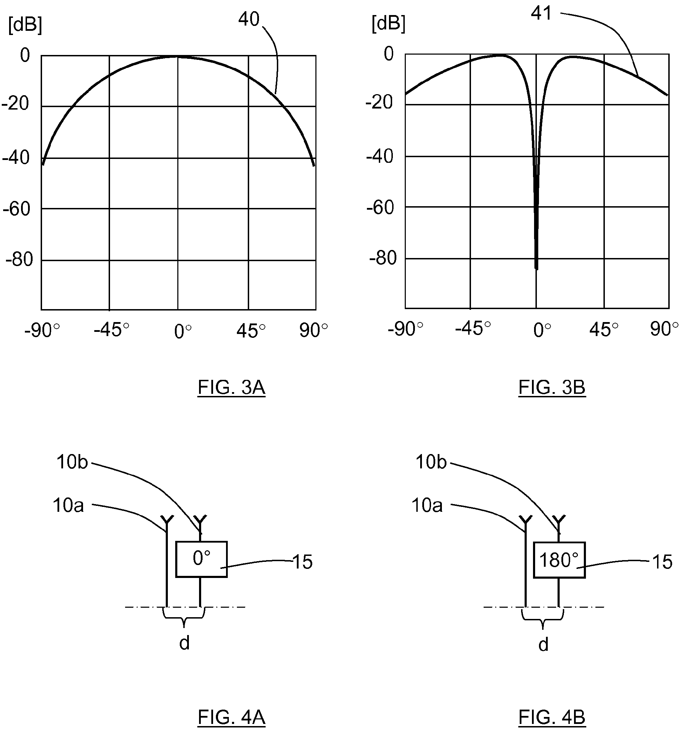

Figure 3A shows a first relative antenna radiation pattern 40 with magnitude in dB on the y-axis and azimuth angle on the x-axis. Figure 3B shows a second relative antenna radiation pattern 41 with magnitude in dB on the y-axis and azimuth angle on the x-axis. The antenna patterns 40, 41 are to be regarded as indicative of a principle, not as mathematically exact.

With reference also to Figure 3A, Figure 3B, Figure 4A and Figure 4B, the transmitter arrangement 8 further comprises a phase switch 15 connected between the signal generator 9 and the second transmitter antenna arrangement 10b. The phase switch 15 is arranged to switch between 0° phase shift, as illustrated in Figure 3A and Figure 4A, and 180° phase shift, as illustrated in Figure 3B and Figure 4B.

With the phase switch 15 in the 0° setting, the radiated energy is focused towards boresight, at 0° in the first antenna radiation pattern 40 in Figure 3A, which constitutes a sum pattern 40. With the phase switch 15 in the 180° setting, the radiated energy has a deep notch in boresight, at 180° in the second radiation pattern diagram 41 in Figure 3B, which constitutes a delta pattern 41.

In the latter case, the pole at 0° in the delta pattern 41 is important to distinguish object position from being on the left or right side of the transceiver arrangement 52.

The sum pattern 40 is thus obtained by feeding both transmitter antenna arrangements 10a, 10b in phase, while the delta pattern 41 is obtained feeding both transmitter antenna arrangements 10a, 10b with a mutual 180° phase difference.

It is desirable that sidelobes, including grating lobes, are suppressed as much as possible. In the following, it is assumed that there are neither sidelobes nor grating lobes at the transmitter antenna arrangements 10a, 10b.

When a target object 6 has been detected, its delta azimuth angle $\theta$ in the delta pattern 41 will be estimated. Furthermore, it is supposed that the complex amplitude of the target object 6 is available for both the sum pattern 40 and the delta pattern 41.

A bearing calculation will be based on the theory of an amplitude-sensing monopulse (ASM). The name derives from the fact that the method is theoretically capable of obtaining a target object's angles using only one (mono) pulse. It uses the amplitude characteristic (magnitude) of its antenna pattern to determine the angular position of a detected target object. Due to the sum pattern 40 and the delta pattern 41 being mirror-symmetric to its corresponding boresight, the phase conditions have to be investigated with the objective of obtaining the sign of the target object's azimuth angle $\theta$.

The additive sensing ratio (ASR) is defined as:

$$ASR = \frac{M_\Delta - M_\Sigma}{M_\Delta + M_\Sigma}. \qquad (1)$$

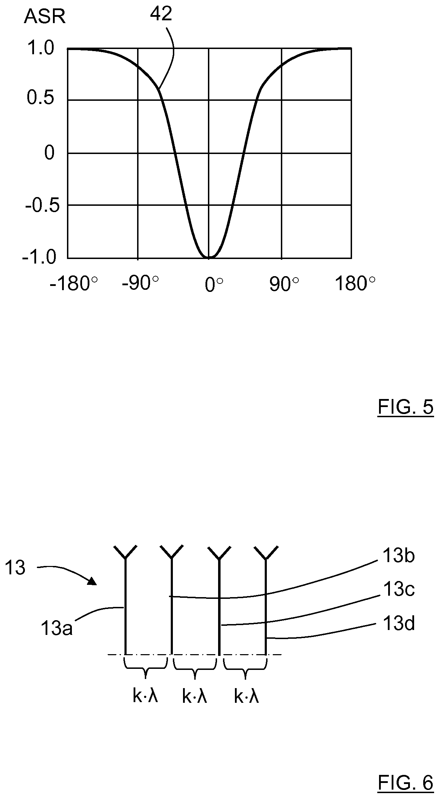

Here, $M_\Sigma$ corresponds to the magnitude of the sum pattern 40, and $M_\Delta$ corresponds to the magnitude of the delta pattern 41. With reference to Figure 5, the ASR 42 is schematically indicated as a function of azimuth angle. Note that the symmetric antenna characteristics imply that the corresponding ASR function does not behave strictly monotonic. Consequently, a unique angle cannot be assigned to a particular ASR phase. The phase characteristics of the antenna radiation patterns 40, 41 will therefore be used, as will be described in the following.

Once a target object 6 has been detected and a complex sum pointer ($\vec{V_\Sigma}$) of the sum pattern 50 and a complex delta pointer ($\vec{V_\Delta}$) of the delta pattern 41 are available, it is straightforward to calculate a phase difference $\Delta_\varphi$ between those two pointers as:

$$\Delta\varphi = phase((\vec{V_\Delta}) \cdot conj(\vec{V_\Sigma})). \qquad (2)$$

Subsequently, an interrelation between phase difference $\Delta_\varphi$ and the azimuth angle $\theta$ is derived. It is now assumed that the complex sum pointer ($\vec{V_\Sigma}$) and the complex delta pointer ($\vec{V_\Delta}$) are linear combinations of $Tx_1$ and $Tx_2$, whereas:

$$\overrightarrow{V_{Tx_1}} = \widehat{y_1} \cdot e^{i \cdot \xi_1} \qquad (3)$$

$$\overrightarrow{V_{Tx_2}} = \widehat{y_2} \cdot e^{i \cdot \xi_2} \qquad (4)$$

The variables $\xi_1$ and $\xi_2$ are cloaked phases which follow a function of a target object's range and bearing. The terms $Tx_1$ and $Tx_2$ correspond to the transmitter antenna arrangements 10a, 10b and the terms $\widehat{y_1}$ and $\widehat{y_1}$ correspond to the amplitude of the respective transmitter antenna arrangements 10a, 10b. Moreover, a cloaked phase difference $\Delta \xi = \xi_2 - \xi_1$ only depends on the target object's azimuth angle $\theta$. The relationship between $\Delta \xi$ and $\theta$ can be described as follows:

$$\Delta \xi = 2\pi \cdot \frac{d}{\lambda} \cdot \sin\theta, \qquad (5)$$

where $\lambda$ is the wavelength of the present frequency and d is the distance between the transmitter antenna arrangements 10a, 10b.

Assuming the amplitudes of both transmitter antenna arrangements 10a, 10b to be the same; $\widehat{y_1} = \widehat{y_2} = \hat{y}$, leads to:

$$\overrightarrow{V_\Sigma} = \hat{y} \cdot \left( e^{i \cdot \xi_1} + e^{i \cdot \xi_2} \right) \qquad (6)$$

$$\overrightarrow{V_\Delta} = \hat{y} \cdot \left( e^{i \cdot \xi_1} - e^{i \cdot \xi_2} \right) \qquad (7)$$

Subtraction between equation (6) and (7) leads to:

$$\Delta\varphi = \ phase \left( \hat{y}^2 \cdot \left( e^{i \cdot \xi_1} - e^{i \cdot \xi_2} \right) \cdot \left( e^{-i \cdot \xi_1} + e^{-i \cdot \xi_2} \right) \right), \qquad (8)$$

and simplified:

$$\Delta\varphi = -\frac{\pi}{2} \cdot sign( \cos\xi_1 \cdot \sin\xi_2 - \sin\xi_1 \cdot \cos\xi_2) . \qquad (9)$$

The function sign(x) has the following properties:

$$\text{sign(x)} = \begin{cases} -1 & \text{if } x < 0, \\ 0 & \text{if } x = 0, \\ 1 & \text{if } x > 0. \end{cases}$$

Equation (9) means that the phase difference $\Delta\varphi$ between sum and delta channel is either $-\pi/2$ or $+\pi/2$, depending on the phase difference $\Delta\varphi$ and accordingly the target object's azimuth angle $\theta$. In the following, the relationship the phase difference $\Delta\varphi$ and the target object's azimuth angle $\theta$ is illustrated. Here, it is assumed that the antenna spacing $D \leq 0.5 \cdot \lambda$.

The following relationship is then formulated:

$$(\Delta\varphi) = sign(\Delta\xi) = sign(\theta) \qquad (10)$$

According to the present disclosure, Amplitude Sensing Monopulse (ASM) at the transmitter arrangement 8 is combined with Digital Beam Forming (DBF) at the receiver arrangement 11.

The angular resolution $\theta_{res}$ may be estimated to be

$$\Theta_{res} \approx \frac{1}{2} \cdot 51° \cdot \frac{\lambda}{a} \qquad (11)$$

where a is the antenna aperture.

With a receiver antenna array 13 as shown in Figure 6, the expected angular resolution would be

$$\theta_{res} \approx 51° / (6 \cdot k). \qquad (12)$$

In Figure 6, the spacing between two adjacent receiver antenna arrangement 13a, 13b, 13c, 13d is $k \cdot \lambda$, where k is a number. Furthermore, the angular accuracy $\theta_{acc}$ of a signal is roughly equivalent to 10% of its resolution and can be estimated using a rule of thumb according to:

$$\theta_{acc} \approx 0.1 \cdot \theta_{res}. \qquad (13)$$

Moreover, the bearing that can be unambiguously measured could be derived from the Nyquist angle $\theta_{Nyquist}$ of the compressed signal according to:

$$\theta_{Nyquist} = 2 \cdot arcsin\frac{\lambda}{2 \cdot a}. \qquad (14)$$

An example with $a = 2 \cdot \lambda$ would result in:

$\theta_{res}$ = 4.25°
$\theta_{acc}$ = 0.43°
$\theta_{Nyquist}$ = 29°

The spacing of the individual receiver antenna arrangements 13a, 13b, 13c, 13d has an important significance for the antenna design. On the one hand one wants to achieve the highest possible angular resolution and accuracy, which requires a large antenna distance. On the other hand, the aim is to ensure the maximum unambiguous range which requires a relatively small antenna spacing. In some cases, both resolution and accuracy may be reduced in favor of a reasonable unambiguous range.

In practice, additional restrictions arise from a relatively small antenna aperture. First to mention would be an undesired crosstalk between the receiver antenna arrangements 13a, 13b, 13c, 13d. The intensity of this crosstalk follows inherently a function of the antenna separation. This behavior may create unpredictable nonlinearities in the bearing processing. Another disadvantage of a relatively small antenna aperture is limited antenna gain, and consequently the SNR of the received signal.

Another aspect of the antenna design is the influence of the vehicle environment, such as for example bumper integration, on the radar performance. A variety of factors should therefore be considered; for example uncontrolled wave propagation, unintentional mode creation, etc. All of these effects also have negative impact on the processing. However, a relatively large antenna spacing mitigate some harmful external effects.

The signal processing of using DBF is based on the assumption that the phases from each of the transceiver channels are dependent on both the receiver antenna array 13 as well as the bearing azimuth angle $\theta$ of the electromagnetic wave to a radar target object 6.

The phase conditions result from the different paths of the transmitting antenna to the target and back to the receiving antenna. At least two transceiver channels are required to determine the delta azimuth angle $\theta$ of a single target object 6. In order to resolve more than one radar target object, a multiple transceiver configuration is required. The relationship between the object target azimuth angle $\theta$ and phase difference $\Delta\xi$ between two transceiver channels can be derived for example via triangulation.

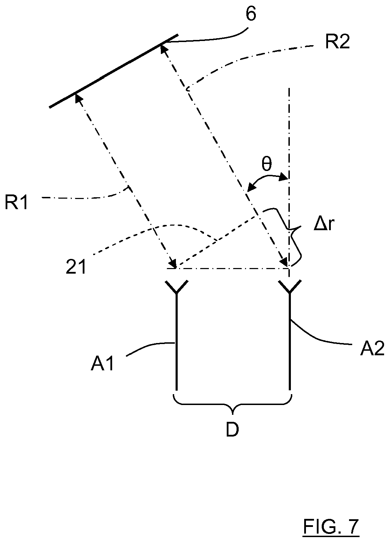

In the following, an uncomplicated antenna configuration with one transmit channel and two receive channels is assumed in order to facilitate the explanation, as shown in Figure 7, where farfield is assumed.

Here, two receiver antennas A1, A2 are assumed to be located with a distance D. There are different path lengths R1 and R2 between the different receiver antennas A1, A2 and a target object 6, and there is an incoming wavefront 21 at a target object azimuth angle θ due to a difference Δr between the path lengths R1 and R2. The path lengths R1 and R2 are expressed as a function of Cartesian coordinates X, Y according to:

$$R_1{}^2 = X^2 + \left(Y - \frac{D}{2}\right)^2 \qquad (15)$$

$$R_2{}^2 = X^2 + \left(Y + \frac{D}{2}\right)^2 \qquad (16)$$

Triangulation gives the Cartesian coordinates X, Y as functions of the path lengths R1 and R2:

$$X = \sqrt{R_2{}^2 - \left(\frac{D^2 + R_2{}^2 - R_1{}^2}{2 \cdot D}\right)^2} \qquad (17)$$

$$Y = \frac{R_2{}^2 - R_1{}^2}{2 \cdot D} \qquad (18)$$

With *R*1,2=*R*±Δ*r/2,* the target object azimuth angle θ can be considered as a function of Δ*r*:

$$\theta = \operatorname{atan}\frac{Y}{X} = \operatorname{atan}\frac{\frac{\left(R - \frac{\Delta r}{2}\right)^2 - \left(R + \frac{\Delta r}{2}\right)^2}{2 \cdot D}}{\sqrt{R_2{}^2 - \left(\frac{D^2 + \left(R - \frac{\Delta r}{2}\right)^2 - \left(R + \frac{\Delta r}{2}\right)^2}{2 \cdot D}\right)^2}} \qquad (19)$$

Applying the far field assumption, i.e.: *R* >> D, leads to:

$$\lim_{R \to \infty}\left(\theta = \operatorname{atan}\frac{\frac{\left(R - \frac{\Delta r}{2}\right)^2 - \left(R + \frac{\Delta r}{2}\right)^2}{2 \cdot D}}{\sqrt{R_2{}^2 - \left(\frac{D^2 + \left(R - \frac{\Delta r}{2}\right)^2 - \left(R + \frac{\Delta r}{2}\right)^2}{2 \cdot D}\right)^2}}\right) \qquad (20)$$

or simplified:

$$\theta = \arcsin\frac{\Delta r}{D} \qquad (21)$$

With $\Delta\xi = 2\pi \cdot \frac{\Delta r}{\lambda}$ :

$$\theta = \arcsin\frac{\Delta\xi \cdot \lambda}{2\pi \cdot D} \qquad (22)$$

The expression "atan" is equivalent to "arctan". If there are only two receiver antennas and two receiver channels available, a phase sensing monopulse (PSM) is used for the DBF.

In the example previously discussed, for example with reference to Figure 2 and Figure 6, four receiver antenna arrangements 13a, 13b, 13c, 13d and four receiver channels are available, there is a linear phase progression over the equidistant receiver antenna arrangements 13a, 13b, 13c, 13d. Therefore it is possible to apply standard methods for spectral analysis resulting in as estimation of the average phase progression from one or more radar target objects.

By means of proper use and placing of the transmitter antenna arrangements 10a, 10b, a synthetic aperture radar (SAR) may be obtained, increasing the number of receiving channels virtually in a previously known manner.

In the following the combined ASM-DBF processing will be described, where said processing in this example is performed in the DSP arrangement 18 in Figure 2. Other processors or processor arrangements may of course be used for this purpose.

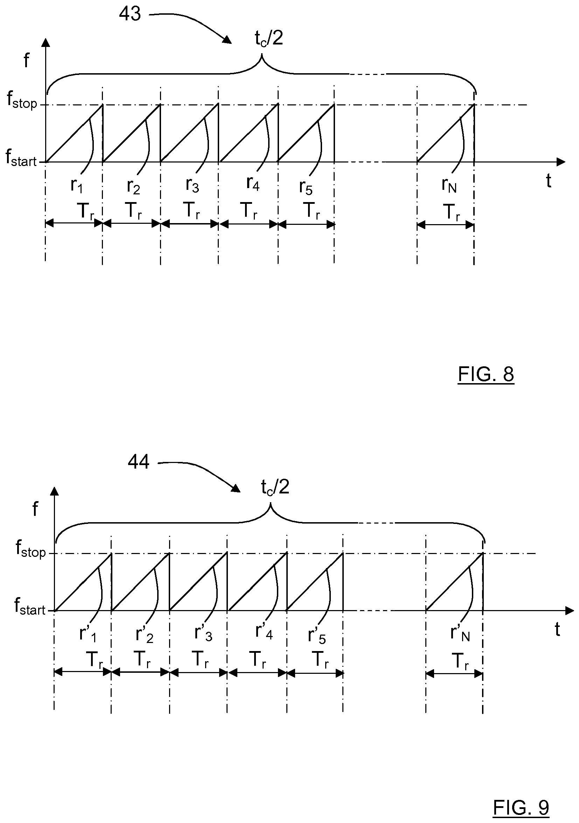

As shown in Figure 8, a sum chirp signal 43 comprises repeating cycles of a first plurality of frequency ramps $r_1 \ldots r_N$ where the chirp signals 4a, 4b of the two transmitter antenna arrangements 10a, 10b are transmitted in phase as shown in Figure 3A and Figure 4A. Each sum cycle of sum chirp signal 43 lasts a half radar cycle time $t_c/2$. As mentioned above, the frequency varies from a first frequency $f_{start}$ to a second frequency $f_{stop}$ over the course of each ramp $r_1 \ldots r_N$, where the magnitude of the first frequency $f_{start}$ in this example falls below the magnitude of the second frequency $f_{stop}$. In this example, each ramp $r_1 \ldots r_N$ lasts a certain ramp time Tr.

As shown in Figure 9, a delta chirp signal 44 comprises repeating cycles of a first plurality of frequency ramps $r'_1 \ldots r'_N$ where the chirp signals 4a, 4b of the two transmitter antenna arrangements 10a, 10b are transmitted out of phase, with a mutual phase shift of 180 ° phase as shown in Figure 3B and Figure 4B. Each delta cycle of delta chirp signal 44 lasts a half radar cycle time $t_c/2$. The sum chirp signal 43 and the delta chirp signal 44 are transmitted in an interleaved manner, such that after a sum cycle of a sum chirp signal 43 there is a delta cycle of a delta chirp signal 44 and so on, where one radar cycle comprises a sum cycle of a sum chirp signal 43 followed by a delta cycle of a delta chirp signal 44, and thus lasts for a radar cycle time $t_c$.

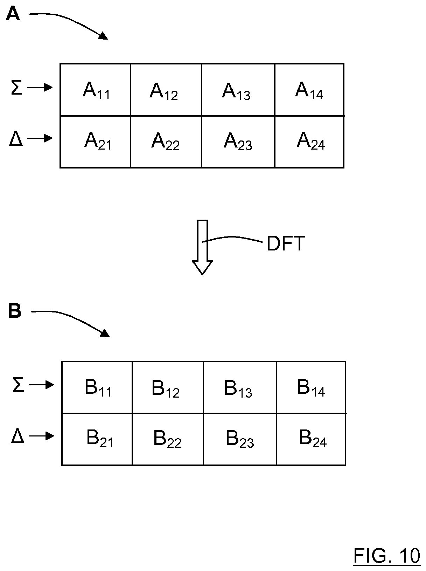

With reference to Figure 10, the complex data of an observation is stored in the form of a first matrix **A** comprising elements in the general form $A_{yx}$, where the first matrix **A** is a 2 by 4 matrix. By performing a DFT (Digital Fourier Transform) in the horizontal dimension, a second matrix **B** comprising elements in the general form $B_{yx}$ is obtained, the second matrix **B** constituting the spectral domain of the first matrix **A.**

The elements in the first row $\Sigma$ of the matrixes **A, B** constitute data from the sum chirp signal 43 as received by the receiver antenna arrangements 13a, 13b, 13c, 13d and the elements in the second row $\Delta$ of the matrixes **A, B** constitute data from the delta chirp signal 44 as received by the receiver antenna arrangements 13a, 13b, 13c, 13d. The four horizontal matrix elements $A_{11}, A_{12}, A_{13}, A_{14}; A_{21}, A_{22}, A_{23}, A_{24}; B_{11}, B_{12}, B_{13}, B_{14}; B_{21}, B_{22}, B_{23}, B_{24}$ in each row $\Sigma$, $\Delta$ correspond to the four receiver antenna arrangements 13a, 13b, 13c, 13d.

All elements of the first matrix **A** belong to one specific range-Doppler cell of both the sum and the difference channel block.

Every radar cycle consists of two data blocks, one for the sum channel and one for the difference channel. Each data block has K matrices of the size N by M, where K is the number of receiver antenna arrangements 13a, 13b, 13c, 13d and number of receiver channels, here four, N is the number of ramps in each one of the sum chirp signal 43 and the delta chirp signal 44, and M is the number of samples for each one of the sum chirp signal 43 and the delta chirp signal 44.

After the transformation of the first matrix **A** into the second matrix **B,** a peak detection on the magnitude data of the second matrix **B** is performed.

In the next step, the bearing parameters have to be estimated in both the horizontal dimension, referred to as the fine dimension, as well as the vertical dimension, referred to as the coarse dimension. Both dimensions differ mainly by angular resolution and ambiguity range.

The ambiguity range of the coarse dimension, the Nyquist angle $\theta_{Nyquist}$, is defined in equation (14). The Nyquist angle $\theta_{Nyaquist}$ will be used together with a coarse azimuth angle $\theta_{coarse}$ to unwrap a fine azimuth angle $\theta_{fine}$. At first, both the coarse azimuth angle $\theta_{coarse}$ and the fine azimuth angle $\theta_{fine}$ must be determined.

For the coarse azimuth angle $\theta_{coarse}$, the dimension of the amplitude monopulse, there are basically two processing choices:

1) Perform a look-up table operation using additive sensing ratio ASR from equation (1) together with sign of the phase difference $\Delta\varphi$ from equation (2). Note that the phase shift caused by the Doppler has to be considered when calculating the phase difference $\Delta\varphi$. This approach has the least computational operations.

2) Perform a phase monopulse calculation after back calculation of the phase condition of the individual transmitting antenna arrangements 10a, 10b using equation (22) together with equation (5). Of course, the Doppler shift has to be considered too.

For the fine azimuth angle $\theta_{fine}$, the dimension of the digital beamforming DBF, the spectral location of the peak in this dimension has to be determined first. Typically, interpolation techniques like a quadratic model approach may be used. Based on the peak location, it is rather uncomplicated to calculate the average phase progression of the target object 6. This results in $\Delta\xi$ of equation (22), and thus the fine azimuth angle $\theta_{fine}$ can be calculated. Note that it is conceivable to perform a look-up table estimation rather than doing the calculating of equation (22).

With knowledge of the Nyquist angle $\theta_{Nyquist}$, the coarse azimuth angle $\theta_{coarse}$ and the fine azimuth angle $\theta_{fine}$ the final calculation can be done:

$$\theta = \mathbf{W} \cdot \theta_{Nyquist} + \theta_{fine}, \qquad (23)$$

where W is the number of aliasing-wraps in the fine dimension according to:

$$\mathbf{W} = \text{round}\frac{\theta_{coarse} - \theta_{fine}}{\theta_{Nyquist}}. \qquad (24)$$

The function round(X) rounds an element X to the nearest integer. Positive elements with a fractional part of 0.5 round up to the nearest positive integer. Negative elements with a fractional part of -0.5 round down to the nearest negative integer.

Exactly how this is accomplished may vary, the example disclosed above is only an example, and the processing may be performed in any suitable processing unit.

The main control unit 38 may be comprised by one or more separate or integrated control units. Each transceiver arrangement 52 may also comprise one or more control units.

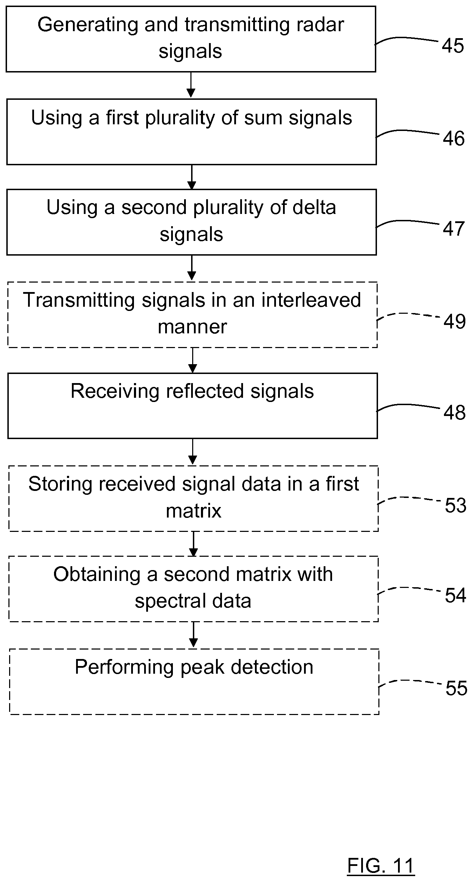

With reference to Figure 11, the present disclosure also relates to a method for a vehicle radar system 3, where the method comprises:

45: Generating and transmitting at least two radar signals 4a, 4b in radar cycles.
46: Using, for each radar cycle, a first plurality of sum signals 43, where the radar signals 4a, 4b are transmitted in phase.
47: Using, for each radar cycle, a second plurality of delta signals 44, where first radar signals 4a are transmitted with a phase difference of 180° to second radar signals 4b.
48: Receiving reflected signals 5a, 5b using at least two receiver antenna arrangements 13a, 13b, 13c, 13 by means of beamforming.

According to an example, the method further comprises:
49: Transmitting each plurality of sum signals 43 and delta signals 44 in an interleaved manner, such that after a sum cycle of a sum signal 43 there is a delta cycle of a delta signal 44 and so on, where one radar cycle comprises a sum cycle followed by a delta cycle.

According to another example, the method comprises:

53: Receiving reflected signals 5a, 5b and storing these in the form of complex data in a first matrix **A.**
54: Performing a DFT (Digital Fourier Transform) in a horizontal dimension such that a second matrix **B** is obtained, the second matrix **B** constituting the spectral domain of the first matrix **A.**
55: Performing peak detection on the magnitude data of the second matrix **B.**

As indicated in Figure 1, the vehicle 1 comprises a safety control unit 50 and safety means 51, for example an emergency braking system and/or an alarm signal device. The safety control unit 50 is arranged to control the safety means 51 in dependence of input from the radar system 3. Such input may be input via the main control unit 38.

The present disclosure is not limited to the examples above, but may vary freely within the scope of the appended claims. For example, the ramp time $T_r$ does not have to be the same for the first chirp signal 4a and the second chirp signal 4b.

Each ramp may be configured as an up-ramp as described, or a down-ramp, or some combination of both such as saw-tooth. The magnitude of the first frequency $f_{start}$ may thus exceed the magnitude of the second frequency $f_{stop}$.

Other kinds of FMCW signals and FMCW signal configurations are also conceivable, as well as other types of Doppler radar signals. Pulse radar, FSK (frequency-shift keying) or CW (continuous wave) waveform are also conceivable like all other kinds of suitable modulation techniques. Generally, the transceiver arrangement 52 is arranged to generate and transmit at least two radar signals 4a, 4b. Both the ASM as well as the DBF require spectral data, amplitude and phase, as input. This means that radar signal processing has to be executed first.

Furthermore, there may be any number of transmitter antenna arrangements 10a, 10b and receiver antenna arrangements 13a, 13b, 13c, 13d, but there is at least two transmitter antenna arrangements and at least two receiver antenna arrangements, such that monopulses at the transmitter antenna arrangements and beamforming at the receiver antenna arrangements are achievable.

Each antenna arrangement 10a, 10b; 13a, 13b, 13c, 13d may for example be constituted by one antenna element or by an array of antenna elements.

The radar system may be implemented in any type of vehicle such as cars, trucks and buses as well as boats and aircraft.

The schematics of vehicle radar systems are simplified, only showing parts that are considered relevant for an adequate description of the present disclosure. It is understood that the general design of radar systems of this kind is well-known in the art.

For example, no signal amplifying and filter arrangements have been shown at the transmitter arrangement 8, or the receiver arrangement 11, but such transmitter and filter arrangements are normally of course placed in suitable positions at the transmitter arrangement 8 and/or the receiver arrangement 11. An anti-aliasing filter is for example often used in the receiver arrangement 11.

Furthermore, no devices that are arranged to use the acquired target information are shown, but many different such devices are of course conceivable; for example a warning and/or collision avoidance system.

The ADC arrangement and the DSP arrangement should each one be interpreted as having a corresponding ADC or DSP functionality, and may each be constituted by a plurality of separate components. Alternatively, each ADC arrangement may be comprised in one ADC chip, and each DSP arrangement may be comprised in one DSP chip.

Generally, the hardware used to generate the radar signal may be arranged to be powered down when it is not needed.

The vehicle radar system 3 has been shown having one transceiver arrangement 52; of course the vehicle radar system 3 may comprise two or more transceiver arrangement having the same or different structures, comprising similar or different components. Such transceiver arrangements may for example be positioned in the front and/or rear corners of the vehicle 1. Each transceiver arrangement 52 may comprise control units.

The combined ASM-DBF processing that has been described is only an example, the present disclosure generally comprises a combination of:

- A transmitter arrangement 8 that is arranged to generate and transmit at least two radar signals 4a, 4b in radar cycles, where each radar cycle comprises a first plurality of sum signals 43, where the radar signals 4a, 4b are transmitted in phase, and a second plurality of delta signals 44, where first radar signals 4a are arranged to be transmitted from at least a first transmitting antenna arrangement 10a with a phase difference of 180° to second radar signals 4b arranged to be transmitted from at least a second transmitting antenna arrangement 10b.

- A receiver arrangement 11 that is arranged to receive reflected signals 5a, 5b by means of at least two receiver antenna arrangements 13a, 13b, 13c, 13 by means of beamforming.

The transmitted signals are thus arranged to be transmitted as monopulses, and amplitude-sensing monopulse (ASM) technique is applied.

The beamforming may for example be in the form of the described digital beamforming (DBF) but other types of beamforming are conceivable. According to an aspect, the ASM transmitter is combined with an analog beamforming receiver. In this case the steering would be achieved with phase-shifter components in between the antenna elements. This technique is also known as 'Phased Array Radar'.

When a phase shift of 180° is mentioned, the mathematically exact figure is not intended, but a phase shift within what is practically obtainable that provides a sum pattern 40 and a delta pattern 41. Therefore, in practice, for the delta signals 44, radar signals 4a are arranged to be transmitted from at least a first transmitting antenna arrangement 10a out of phase with radar signals 4b arranged to be transmitted from at least a second transmitting antenna arrangement 10b.

## Claims

1. A vehicle radar system (3) comprising at least one transceiver arrangement (52) that in turn comprises a transmitter arrangement (8) that is arranged to generate and transmit at least two radar signals (4a, 4b) in radar cycles, where each radar cycle comprises a first plurality of sum signals (43), where the radar signals (4a, 4b) are transmitted in phase, and a second plurality of delta signals (44), where first radar signals (4a) are arranged to be transmitted from at least a first transmitting antenna arrangement (10a) out of phase with second radar signals (4b) arranged to be transmitted from at least a second transmitting antenna arrangement (10b), **characterized in that** the vehicle radar system (3) further comprises a receiver arrangement (11) that is arranged to receive reflected signals (5a, 5b) by means of at least two receiver antenna arrangements (13a, 13b, 13c, 13) by means of beamforming where each plurality of sum signals (43) and delta signals (44) comprises a corresponding number of repetitive successive frequency ramps ($r_1$, $r_2$ ... $r_N$; $r'_1$, $r'_2$ ... $r'_N$).

2. A vehicle radar system (3) according to claim 1, **characterized in that** for the delta signals (44), the first radar signals (4a) are arranged to be transmitted from at least the first transmitting antenna arrangement (10a) with a phase difference of 180° to the second radar signals (4b) arranged to be transmitted from at least the second transmitting antenna arrangement (10b).

3. A vehicle radar system (3) according to any one of the claims 1 or 2, **characterized in that** each plurality of sum signals (43) and delta signals (44) are transmitted in an interleaved manner, such that after a sum cycle of a sum signal (43) there is a delta cycle of a delta signal (44) and so on, where one radar cycle comprises a sum cycle followed by a delta cycle.

4. A vehicle radar system (3) according to any one of the previous claims, **characterized in that** each radar signal comprises FMCW, Frequency Modulated Continuous Wave, chirp signals (4a, 4b).

5. A vehicle radar system (3) according to any one of the previous claims, **characterized in that** the vehicle radar system (3) is arranged to:

   - receive reflected signals (5a, 5b) and store these in the form of complex data in a first matrix (**A**);
   - perform a DFT, Digital Fourier Transform, in a horizontal dimension such that a second matrix (**B**) is obtained, the second matrix (**B**) constituting the spectral domain of the first matrix (**A**); and to
   - perform a peak detection on the magnitude data of the second matrix (**B**).

6. A vehicle radar system (3) according to claim 5, **characterized in that** the vehicle radar system (3) is arranged to estimate bearing parameters in both the horizontal dimension, referred to as the fine dimension, as well as the vertical dimension, referred to as the coarse dimension.

7. A method for a vehicle radar system, where the method comprises:

   (45) generating and transmitting at least two radar signals (4a, 4b) in radar cycles;
   (46) using, for each radar cycle, a first plurality of sum signals (43), where the radar signals (4a, 4b) are transmitted in phase; and
   (47) using, for each radar cycle, a second plurality of delta signals (44), where first radar signals (4a) are transmitted out of phase with second radar signals (4b);

   **characterized in that** the method further comprises:
   (48) receiving reflected signals (5a, 5b) using at least two receiver antenna arrangements (13a, 13b, 13c, 13) by means of beamforming, where each plurality of sum signals (43) and delta signals (44) uses a corresponding number of repetitive successive frequency ramps ($r_1$, $r_2$ ... $r_N$; $r'_1$, $r'_2$ ... $r'_N$).

8. The method according to claim 7, **characterized in that** for the delta signals (44), the first radar signals (4a) are transmitted with a phase difference of 180° to the second radar signals (4b).

9. The method according to any one of the claims 7 or 8, **characterized in that** a first transmitting antenna arrangement (10a) is used for the first radar signals (4a) and that a second transmitting antenna arrangement (10b) is used for the second radar signals (4b).

10. The method according to any one of the claims 7-9, **characterized in that** the method comprises:
    (49) transmitting each plurality of sum signals (43) and delta signals (44) in an interleaved manner, such that after a sum cycle of a sum signal (43) there is a delta cycle of a delta signal (44) and so on, where one radar cycle comprises a sum cycle followed by a delta cycle.

11. The method according to any one of the claims 7-10, **characterized in that** each radar signal uses FMCW, Frequency Modulated Continuous Wave, chirp signals (4a, 4b).

12. The method according to any one of the claims 7-11, **characterized in that** the method comprises:

(53) receiving reflected signals (5a, 5b) and storing these in the form of complex data in a first matrix (**A**);
(54) performing a DFT, Digital Fourier Transform, in a horizontal dimension such that a second matrix (**B**) is obtained, the second matrix (**B**) constituting the spectral domain of the first matrix (**A**); and
(55) performing peak detection on the magnitude data of the second matrix (**B**).

13. The method according to claim 12, **characterized in that** the method comprises estimating bearing parameters in both a horizontal dimension and a vertical dimension.

**Patentansprüche**

1. Fahrzeugradarsystem (3) mit mindestens einer Sender-EmpfängerAnordnung (52), die ihrerseits eine Senderanordnung (8) umfasst, die so angeordnet ist, dass sie mindestens zwei Radarsignale (4a, 4b) in Radarzyklen erzeugt und sendet, wobei jeder Radarzyklus eine erste Vielzahl von Summensignalen (43) umfasst, wobei die Radarsignale (4a, 4b) phasengleich übertragen werden, und eine zweite Vielzahl von Deltasignalen (44), wobei erste Radarsignale (4a) so angeordnet sind, dass sie von mindestens einer ersten Sendeantennenanordnung (10a) phasenverschoben übertragen werden, während zweite Radarsignale (4b) so angeordnet sind, dass sie von mindestens einer zweiten Sendeantennenanordnung (10b) übertragen werden, **dadurch gekennzeichnet, dass** das Fahrzeugradarsystem (3) ferner eine Empfängeranordnung (11) umfasst, die so angeordnet ist, dass sie reflektierte Signale (5a, 5b) mittels mindestens zwei Empfängerantennenanordnungen (13a, 13b, 13c, 13) mittels Strahlformung empfängt, wobei jede Vielzahl von Summensignalen (43) und Deltasignalen (44) eine entsprechende Anzahl von sich wiederholenden aufeinanderfolgenden Frequenzrampen umfasst
($r_{Iz}$ $r_2$ ... $r_N$; $r'_{Ir}$ $r'_2$ ... $r'N$).

2. Fahrzeugradarsystem (3) nach Anspruch 1, **dadurch gekennzeichnet, dass** für die Deltasignale (44) die ersten Radarsignale (4a) so angeordnet sind, dass sie von mindestens der ersten Sendeantennenanordnung (10a) mit einer Phasendifferenz von 180° zu den zweiten Radarsignalen (4b) übertragen werden, die so angeordnet sind, dass sie von mindestens der zweiten Sendeantennenanordnung (10b) übertragen werden.

3. Fahrzeugradarsystem (3) nach einem der Ansprüche 1 oder 2, **dadurch gekennzeichnet, dass** jede Vielzahl von Summensignalen (43) und Deltasignalen (44) in einer verschachtelten Weise übertragen werden, so dass nach einem Summenzyklus eines Summensignals (43) ein Deltazyklus eines Deltasignals (44) und so weiter vorliegt, wobei ein Radarzyklus einen Summenzyklus gefolgt von einem Deltazyklus umfasst.

4. Fahrzeugradarsystem (3) nach einem der vorstehenden Ansprüche, **dadurch gekennzeichnet, dass** jedes Radarsignal frequenzmodulierte Dauerstrich-Chirp-Signale (FMCW) (4a, 4b) umfasst.

5. Fahrzeugradarsystem (3) nach einem der vorstehenden Ansprüche, **dadurch gekennzeichnet, dass** das Radarsystem (3) angeordnet ist zum:

- Empfangen reflektierter Signale (5a, 5b) und Speichern dieser in Form von komplexen Daten in einer ersten Matrix (**A**);
- Durchführen einer digitalen Fourier-Transformation (DFT) in einer horizontalen Dimension, so dass eine zweite Matrix (**B**) erhalten wird, wobei die zweite Matrix (**B**) den Spektralbereich der ersten Matrix bildet (**A**); und
- Durchführen einer Spitzendetektion an den Größendaten der zweiten Matrix (**B**).

6. Fahrzeugradarsystem (3) nach Anspruch 5, **dadurch gekennzeichnet, dass** das Fahrzeugradarsystem (3) so angeordnet ist, dass es Peilungsparameter sowohl in der horizontalen Dimension, die als feine Dimension bezeichnet wird, als auch in der vertikalen Dimension, die als grobe Dimension bezeichnet wird, schätzt.

7. Verfahren für ein Fahrzeugradarsystem, wobei das Verfahren umfasst:

(45) Erzeugen und Übertragen von mindestens zwei Radarsignalen (4a, 4b) in Radarzyklen;
(46) Verwenden, für jeden Radarzyklus, einer ersten Vielzahl von Summensignalen (43), wobei die Radarsignale (4a, 4b) phasengleich übertragen werden; und

(47) Verwenden, für jeden Radarzyklus, einer zweiten Vielzahl von Deltasignalen (44), wobei erste Radarsignale (4a) phasenverschoben zu zweiten Radarsignalen (4b) übertragen werden; **dadurch gekennzeichnet, dass** das Verfahren ferner umfasst:

(48) Empfangen reflektierter Signale (5a, 5b) unter Verwendung von mindestens zwei Empfängerantennenanordnungen (13a, 13b, 13c, 13) mittels Strahlformung, wobei jede Vielzahl von Summensignalen (43) und Deltasignalen (44) eine entsprechende Anzahl von sich wiederholenden aufeinanderfolgenden Frequenzrampen verwendet

($r_{Iz}$, $r_2$ ... $r_N$; $r'_{Ir}$ $r'_2$ ... $r'_N$).

8. Verfahren nach Anspruch 7, **dadurch gekennzeichnet, dass** für die Deltasignale (44) die ersten Radarsignale (4a) mit einer Phasendifferenz von 180° zu den zweiten Radarsignalen (4b) übertragen werden.

9. Verfahren nach einem der Ansprüche 7 oder 8, **dadurch gekennzeichnet, dass** für die ersten Radarsignale (4a) eine erste Sendeantennenanordnung (10a) verwendet wird und dass für die zweiten Radarsignale (4b) eine zweite Sendeantennenanordnung (10b) verwendet wird.

10. Verfahren nach einem der Ansprüche 7-9, **dadurch gekennzeichnet, dass** das Verfahren umfasst:
(49) Übertragen jeder Vielzahl von Summensignalen (43) und Deltasignalen (44) in einer verschachtelten Weise, so dass nach einem Summenzyklus eines Summensignals (43) ein Deltazyklus eines Deltasignals (44) vorliegt und so weiter, wobei ein Radarzyklus einen Summenzyklus gefolgt von einem Deltazyklus umfasst.

11. Verfahren nach einem der Ansprüche 7-10, **dadurch gekennzeichnet, dass** jedes Radarsignal frequenzmodulierte Dauerstrich-Chirp-Signale (FMCW) (4a, 4b) verwendet.

12. Verfahren nach einem der Ansprüche 7-11, **dadurch gekennzeichnet, dass** das Verfahren umfasst:

(53) Empfangen reflektierter Signale (5a, 5b) und Speichern dieser in Form komplexer Daten in einer ersten Matrix (**A**);
(54) Durchführen einer digitalen Fourier-Transformation (DFT) in einer horizontalen Dimension, so dass eine zweite Matrix (**B**) erhalten wird, wobei die zweite Matrix (**B**) den Spektralbereich der ersten Matrix (**A**) bildet; und
(55) Durchführen einer Spitzendetektion an den Größendaten der zweiten Matrix (**B**).

13. Verfahren nach Anspruch 12, **dadurch gekennzeichnet, dass** das Verfahren das Schätzen von Peilungsparametern sowohl in einer horizontalen Dimension als auch in einer vertikalen Dimension umfasst.

## Revendications

1. Système radar de véhicule (3) comprenant au moins un agencement d'émetteur-récepteur (52) qui à son tour comprend un agencement d'émetteur (8) qui est agencé pour générer et transmettre au moins deux signaux radar (4a, 4b) dans des cycles radar, où chaque cycle radar comprend une première pluralité de signaux de somme (43), où les signaux radar (4a, 4b) sont transmis en phase, et une deuxième pluralité de signaux delta (44), où des premiers signaux radar (4a) sont agencés pour être transmis à partir d'au moins un premier agencement d'antenne de transmission (10a) en déphasage avec des deuxièmes signaux radar (4b) agencés pour être transmis à partir d'au moins un deuxième agencement d'antenne de transmission (10b), **caractérisé en ce que** le système radar de véhicule (3) comprend en outre un agencement de récepteur (11) qui est agencé pour recevoir des signaux réfléchis (5a, 5b) au moyen d'au moins deux agencements d'antenne de réception (13a, 13b, 13c, 13) au moyen d'une formation de faisceau où chaque pluralité de signaux de somme (43) et de signaux delta (44) comprend un nombre correspondant de rampes de fréquence répétitives successives

($r_1$, $r_2$... $r_N$ ; $r'_1$, $r'_2$ ... $r'_N$).

2. Système radar de véhicule (3) selon la revendication 1, **caractérisé en ce que** pour les signaux delta (44), les premiers signaux radar (4a) sont agencés pour être transmis à partir d'au moins le premier agencement d'antenne de transmission (10a) avec une différence de phase de 180° par rapport aux deuxièmes signaux radar (4b) agencés pour être transmis à partir d'au moins le deuxième agencement d'antenne de transmission (10b).

3. Système radar de véhicule (3) selon l'une quelconque des revendications 1 ou 2, **caractérisé en ce que** chaque pluralité de signaux de somme (43) et de signaux delta (44) sont transmises d'une manière entrelacée, de telle sorte qu'après un cycle de somme d'un signal de somme (43) il y a un cycle delta d'un signal delta (44) et ainsi de suite, où un cycle radar comprend un cycle de somme suivi par un cycle delta.

4.  Système radar de véhicule (3) selon l'une quelconque des revendications précédentes, **caractérisé en ce que** chaque signal radar comprend des signaux fluctuants à onde continue modulée en fréquence FMCW (Frequency Modulated Continuous Wave) (4a, 4b).

5.  Système radar de véhicule (3) selon l'une quelconque des revendications précédentes, **caractérisé en ce que** le système radar de véhicule (3) est agencé pour :

    - recevoir des signaux réfléchis (5a, 5b) et stocker ceux-ci sous la forme de données complexes dans une première matrice (**A**) ;
    - mettre en œuvre une transformée de Fourier numérique DFT (Digital Fourier Transform), dans une dimension horizontale de telle sorte qu'une deuxième matrice (**B**) est obtenue, la deuxième matrice (**B**) constituant le domaine spectral de la première matrice (**A**) ; et pour
    - mettre en œuvre une détection de pic sur les données de grandeur de la deuxième matrice (**B**).

6.  Système radar de véhicule (3) selon la revendication 5, **caractérisé en ce que** le système radar de véhicule (3) est agencé pour estimer des paramètres d'incidence à la fois dans la dimension horizontale, dénommée dimension fine, ainsi que dans la dimension verticale, dénommée dimension grossière.

7.  Procédé pour un système de radar de véhicule, où le procédé comprend :

    (45) la génération et la transmission d'au moins deux signaux radar (4a, 4b) dans des cycles radar ;
    (46) l'utilisation, pour chaque cycle radar, d'une première pluralité de signaux de somme (43), où les signaux radar (4a, 4b) sont transmis en phase ; et
    (47) l'utilisation, pour chaque cycle radar, d'une deuxième pluralité de signaux delta (44), où des premiers signaux radar (4a) sont transmis en déphasage avec des deuxièmes signaux radar (4b) ; **caractérisé en ce que** le procédé comprend en outre :
    (48) la réception de signaux réfléchis (5a, 5b) en utilisant au moins deux agencements d'antenne de réception (13a, 13b, 13c, 13) au moyen d'une formation de faisceau, où chaque pluralité de signaux de somme (43) et de signaux delta (44) utilise un nombre correspondant de rampes de fréquence répétitives successives $(r_1, r_2 \ldots r_N ; r'_1, r'_2 \ldots r'_N)$.

8.  Procédé selon la revendication 7, **caractérisé en ce que** pour les signaux delta (44), les premiers signaux radar (4a) sont transmis avec une différence de phase de 180° par rapport aux deuxièmes signaux radar (4b).

9.  Procédé selon l'une quelconque des revendications 7 ou 8, **caractérisé en ce qu'un** premier agencement d'antenne de transmission (10a) est utilisé pour les premiers signaux radar (4a) et **en ce qu'**un deuxième agencement d'antenne de transmission est utilisé pour les deuxièmes signaux radar (4b).

10. Procédé selon l'une quelconque des revendications 7 à 9, **caractérisé en ce que** le procédé comprend :
    (49) la transmission de chaque pluralité de signaux de somme (43) et de signaux delta (44) d'une manière entrelacée, de telle sorte qu'après un cycle de somme d'un signal de somme (43) il y a un cycle delta d'un signal delta (44) et ainsi de suite, où un cycle radar comprend un cycle de somme suivi par un cycle delta.

11. Procédé selon l'une quelconque des revendications 7 à 10, **caractérisé en ce que** chaque signal radar utilise des signaux fluctuants à onde continue modulée en fréquence FMCW (Frequency Modulated Continuous Wave) (4a, 4b).

12. Procédé selon l'une quelconque des revendications 7 à 11, **caractérisé en ce que** le procédé comprend :

    (53) la réception de signaux réfléchis (5a, 5b) et le stockage de ceux-ci sous la forme de données complexes dans une première matrice (**A**) ;
    (54) la mise en œuvre d'une transformée de Fourier numérique DFT (Digital Fourier Transform), dans une dimension horizontale de telle sorte qu'une deuxième matrice (**B**) est obtenue, la deuxième matrice (**B**) constituant le domaine spectral de la première matrice (**A**) ; et
    (55) la mise en œuvre d'une détection de pic sur les données de grandeur de la deuxième matrice (**B**).

**13.** Procédé selon la revendication 12, **caractérisé en ce que** le procédé comprend l'estimation de paramètres d'incidence à la fois dans une dimension horizontale et dans une dimension verticale.

FIG. 1

FIG. 2

[dB]

40

0

-20

-40

-60

-80

-90°   -45°   0°   45°   90°

FIG. 3A

[dB]

41

0

-20

-40

-60

-80

-90°   -45°   0°   45°   90°

FIG. 3B

10b

10a

0°

15

d

FIG. 4A

10b

10a

180°

15

d

FIG. 4B

FIG. 5

FIG. 6

FIG. 7

FIG. 8

FIG. 9

**A**

| Σ → | $A_{11}$ | $A_{12}$ | $A_{13}$ | $A_{14}$ |
|---|---|---|---|---|
| Δ → | $A_{21}$ | $A_{22}$ | $A_{23}$ | $A_{24}$ |

⇓ — DFT

**B**

| Σ → | $B_{11}$ | $B_{12}$ | $B_{13}$ | $B_{14}$ |
|---|---|---|---|---|
| Δ → | $B_{21}$ | $B_{22}$ | $B_{23}$ | $B_{24}$ |

FIG. 10

Generating and transmitting radar signals — 45

Using a first plurality of sum signals — 46

Using a second plurality of delta signals — 47

Transmitting signals in an interleaved manner — 49

Receiving reflected signals — 48

Storing received signal data in a first matrix — 53

Obtaining a second matrix with spectral data — 54

Performing peak detection — 55

FIG. 11

**EP 3 176 604 B1**

**Patent documents cited in the description**

- EP 2876460 A
- US 2009079617 A
- US 6911934 B